# EUROPÄISCHE PATENTANMELDUNG

(11) **EP 1 221 567 A2**
(43) Veröffentlichungstag der Anmeldung: **10.07.2002**
(21) Anmeldenummer: 01128092.2
(22) Anmeldetag: 27.11.2001
(51) Int. Cl.: F16L 11/08

(54) **Förderschlauch**

(30) Priorität: 07.12.2000 DE 10061182
(71) Anmelder: PHOENIX AKTIENGESELLSCHAFT, 21079 Hamburg (DE); FlexoTech GmbH, 21493 Elmenhorst (DE)
(72) Erfinder: Rathje, Günter, 21039 Börnsen (DE); Seibt, Dieter, 22885 Barsbüttel (DE); Wachenhusen, Alexander, 24536 Neumünster (DE); Zerfowski, Peter, 21147 Hamburg (DE)

(57) **Zusammenfassung**

Die Erfindung betrifft einen Förderschlauch (1), umfassend wenigstens:
- eine Innenschicht aus elastomerem Werkstoff;
- einen eingebetteten Festigkeitsträger, der aus Fäden gebildet ist, die in einem Winkel (α) zur Schlauchachse (X) verlaufen;
- eine Außenschicht aus elastomerem Werkstoff sowie
- einen Folienstreifen (7) aus abriebfestem Werkstoff, insbesondere auf Basis UHMwPE, der auf der Außenschicht aufgebracht ist und bei einer Breite (a) wendelförmig verläuft, und zwar unter Bildung eines Abstandes (b) von Windung zu Windung für die Diffusionszone (8).

Nach einem vorteilhaften Schichtenaufbau weist der Förderschlauch einen ersten Festigkeitsträger mit Fadenwinkel (α₁) und einen zweiten Festigkeitsträger mit Fadenwinkel (α₂) auf, wobei zwischen diesen beiden Festigkeitsträgerlagen eine Federstahldrahtspirale angeordnet ist. In diesem Zusammenhang werden vorteilhafte Winkelparameter vorgestellt.

Ferner werden zweckmäßig Werkstoffparameter des Folienstreifens (7) beschrieben.

## Beschreibung

Die Erfindung betrifft einen Förderschlauch.

Ein Förderschlauch ist ein mehrschichtiges Gebilde mit folgendem Grundaufbau. Zwischen einer Innenschicht (Seele) und Außenschicht (Decke), die beide aus einem elastomeren Werkstoff bestehen, ist ein Festigkeitsträger eingebettet. Der Festigkeitsträger ist dabei aus Fäden gebildet, die in einem Winkel α zur Schlauchachse verlaufen. Diese Fäden bestehen insbesondere aus textilen Werkstoffen und sind zudem zumeist gekreuzt zueinander angeordnet. Diesbezüglich wird insbesondere auf die deutsche Offenlegungsschrift DE-A-33 33 522 (Fig. 2) verwiesen.

Zwecks Verhinderung des Abriebes der Außenschicht an Förderschläuchen, insbesondere bei Anwendungsfällen, bei denen die Schläuche durch permanente Bewegung aneinander reiben, ist bereits vorgeschlagen worden, derartige Schläuche mit einer zusätzlichen Schutzschicht (Abriebschutz) zu versehen, die auf der Außenschicht aufgebracht ist.

Die Aufgabe der Erfindung besteht nun darin, eine Schutzschicht bereitzustellen, bei der gasförmige Medienbestandteile von innen nach außen durchdiffundieren können. Ferner muss die Längenänderung des Schlauches bei Betriebsdruck so beschaffen sein, dass die Schutzschicht nur sehr minimal gestreckt wird und somit möglichst spannungsfrei auf der Oberfläche des Schlauches liegt.

Gemäß Patentanspruch 1 wird die Aufgabe dadurch gelöst, dass die Schutzschicht ein Folienstreifen aus abriebfestem Werkstoff ist, der auf der Außenschicht aufgebracht ist und bei einer Breite a wendelförmig verläuft und zwar unter Bildung eines Abstandes b von Windung zu Windung für die Diffusionszone.

Zweckmäßige Ausgestaltungen des erfindungsgemäßen Förderschlauches sind in den Patentansprüchen 2 bis 15 genannt.

Die Erfindung wird nun anhand eines Ausführungsbeispieles unter Bezugnahme auf schematische Zeichnungen erläutert. Es zeigen:
- Fig. 1: einen mehrschichtigen Schlauchaufbau;
- Fig. 2: einen wendelförmigen Verlauf des Folienstreifens.

In Verbindung mit diesen Figuren gilt folgende Bezugszeichenliste:
- **1**: Förderschlauch
- **2**: Innenschicht
- **3**: erster Festigkeitsträger mit Fadenwinkel α₁
- **4**: Spirale (Federstahldrahtspirale)
- **5**: zweiter Festigkeitsträger mit Fadenwinkel α₂
- **6**: Außenschicht
- **7**: wendelförmiger Folienstreifen mit Breite **a** und Abstand **b**
- **8**: Diffusionszone
- **X**: Schlauchachse

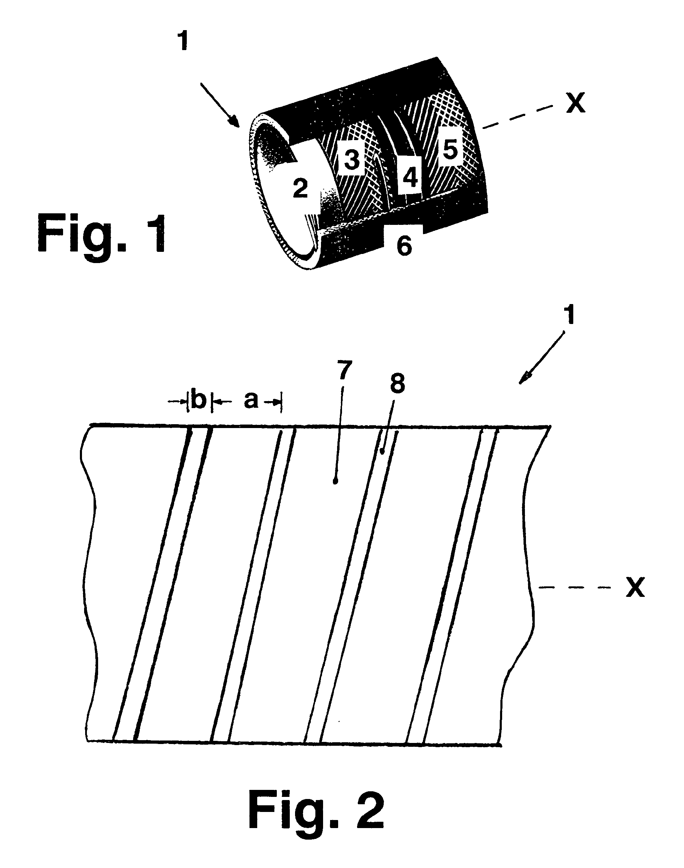

Nach Fig. 1 und 2 umfasst der Förderschlauch **1** folgenden Schichtenaufbau:
- eine Innenschicht **2** aus elastomerem Werkstoff;
- einen eingebetteten ersten Festigkeitsträger **3**, der aus Fäden gebildet ist, die in einem Winkel α₁ zur Schlauchachse **X** verlaufen;
- einen eingebetteten zweiten Festigkeitsträger **5,** der ebenfalls aus Fäden gebildet ist, die in einem Winkel α₂ zur Schlauchachse **X** verlaufen;
- wenigstens eine Spirale **4,** die zwischen dem ersten und zweiten Festigkeitsträger angeordnet ist;
- eine Außenschicht **6** aus elastomerem Werkstoff sowie
- einen Folienstreifen **7** aus abriebfestem Werkstoff, der auf der Außenschicht **6** aufgebracht ist und bei einer Breite **a** wendelförmig verläuft, und zwar unter Bildung eines Abstandes **b** von Windung zu Windung für die Diffusionszone **8**.

Der Folienstreifen besteht dabei insbesondere aus einer UHMwPE (Ultra High Molecularweight Polyethylene)-Folie. Hierzu wird häufig auch die Kurzform UPE-Folie verwendet. Sie ist schwarz und hat zudem einen hohen Anteil von UV-Schutz und ist antistatisch.

Hinsichtlich der Breite **a** des Folienstreifens, des Abstandes **b** von Windung zu Windung wie auch der Foliendicke gelten zweckmäßigerweise folgende Parameter:

| | |
|---|---|
| Breite **a** | 50 mm bis 100 mm, insbesondere 50 mm |
| Abstand **b** | 5 mm bis 15 mm, insbesondere 10 mm |
| Dicke | 0,2 mm bis 1 mm, insbesondere 0,2 mm |

Was die Fadenwinkel α₁ und α₂ des ersten Festigkeitsträgers **3** bzw. **5** betrifft, so sind folgende Winkelparameter, und zwar bezogen auf die Schlauchachse **X**, von Vorteil:
α₁, α₂ 40° bis < 54°, insbesondere 45°

Mit diesen Winkelbereichen, insbesondere mit dem Winkel von 45°, wird erreicht, dass der Folienstreifen **7** auf der Außenschicht **6** spannungsfrei aufliegt und nur einer minimalen Dehnung ausgesetzt wird. Dadurch kann der Folienstreifen die Aufgabe des Abriebschutzes in optimaler Weise übernehmen.

Die Spirale **4** ist insbesondere eine Federstahldrahtspirale.

Die Innenschicht **2** und Außenschicht **6** bestehen vorzugsweise aus einem Ethylen-Propylen-Dien-Mischpolymerisat (EPDM) oder dessen Verschnitten.

## Patentansprüche

1. Förderschlauch (1), umfassend wenigstens:
- eine Innenschicht (2) aus elastomerem Werkstoff;
- einen eingebetteten Festigkeitsträger (3, 5), der aus Fäden gebildet ist, die in einem Winkel (α) zur Schlauchachse (X) verlaufen;
- eine Außenschicht (7) aus elastomerem Werkstoff sowie
- einen Folienstreifen (6) aus abriebfestem Werkstoff, der auf der Außenschicht (6) aufgebracht ist und bei einer Breite (a) wendelförmig verläuft, und zwar unter Bildung eines Abstandes (b) von Windung zu Windung für die Diffusionszone (8).

2. Förderschlauch (1) nach Anspruch 1, umfassend:
- eine Innenschicht (2) aus elastomerem Werkstoff;
- einen eingebetteten ersten Festigkeitsträger (3), der aus Fäden gebildet ist, die in einem Winkel (α₁) zur Schlauchachse (X) verlaufen;
- einen eingebetteten zweiten Festigkeitsträger (5), der ebenfalls aus Fäden gebildet ist, die in einem Winkel (α₂) zur Schlauchachse (X) verlaufen;
- wenigstens eine Spirale (4), die zwischen dem ersten und zweiten Festigkeitsträger angeordnet ist;
- eine Außenschicht (6) aus elastomerem Werkstoff sowie
- einen Folienstreifen (7) aus abriebfestem Werkstoff, der auf der Außenschicht (6) aufgebracht ist und bei einer Breite (a) wendelförmig verläuft, und zwar unter Bildung eines Abstandes (b) von Windung zu Windung für die Diffusionszone (8).

3. Förderschlauch nach Anspruch 1 oder 2, **dadurch gekennzeichnet, dass** der Folienstreifen (7) aus einer UHMwPE-Folie besteht.

4. Förderschlauch nach einem der Ansprüche 1 bis 3, **dadurch gekennzeichnet, dass** der Folienstreifen (7) schwarz ist.

5. Förderschlauch nach einem der Ansprüche 1 bis 4, **dadurch gekennzeichnet, dass** die Breite (a) des Folienstreifens (7) 50 mm bis 100 mm beträgt.

6. Förderschlauch nach Anspruch 5, **dadurch gekennzeichnet, dass** die Breite (a) des Folienstreifens (7) 50 mm beträgt.

7. Förderschlauch nach einem der Ansprüche 1 bis 6, **dadurch gekennzeichnet, dass** der Abstand (b) von Windung zu Windung 5 mm bis 15 mm beträgt.

8. Förderschlauch nach Anspruch 7, **dadurch gekennzeichnet, dass** der Abstand (b) von Windung zu Windung 10 mm beträgt.

9. Förderschlauch nach einem der Ansprüche 1 bis 8, **dadurch gekennzeichnet, dass** die Foliendicke 0,2 mm bis 1 mm beträgt.

10. Förderschlauch nach Anspruch 9, **dadurch gekennzeichnet, dass** die Foliendicke 0,2 mm beträgt.

11. Förderschlauch nach einem der Ansprüche 1 bis 10, **dadurch gekennzeichnet, dass** die Fäden in einem Winkel (α, α₁, α₂) von 40° bis < 54° zur Schlauchachse (X) verlaufen.

12. Förderschlauch nach Anspruch 11, **dadurch gekennzeichnet, dass** die Fäden in einem Winkel (α, α₁, α₂) von 45° verlaufen.

13. Förderschlauch nach einem der Ansprüche 2 bis 12, **dadurch gekennzeichnet, dass** zwischen dem ersten und zweiten Festigkeitsträger (3, 5) zwei Spiralen (4) angeordnet sind.

14. Förderschlauch nach einem der Ansprüche 2 bis 13, **dadurch gekennzeichnet, dass** die Spirale (4) eine Federstahldrahtspirale ist.

15. Förderschlauch nach einem der Ansprüche 1 bis 14, **dadurch gekennzeichnet, dass** die Innenschicht (2) und/oder Außenschicht (6) aus einem Ethylen-Propylen-Dien-Mischpolymerisat oder dessen Verschnitten besteht.
